# EUROPEAN PATENT SPECIFICATION

(11) **EP 4 585 498 B1**
(45) Date of publication and mention of the grant of the patent: **03.06.2026**
(21) Application number: 25151223.2
(22) Date of filing: 10.01.2025
(51) Int. Cl.: B62J 43/20, B62K 5/08, B62K 5/10, B62K 7/04

(54) **VEHICLE**
FAHRZEUG
VÉHICULE

(30) Priority: 11.01.2024 JP 2024002542
(43) Date of publication of application: 16.07.2025
(73) Proprietor: Yamaha Hatsudoki Kabushiki Kaisha, Iwata-shi, Shizuoka 438-8501 (JP)
(72) Inventor: Muramatsu, Yasuyuki, Iwata-shi, Shizuoka, 4388501 (JP); Fukushige, Shunji, Iwata-shi, Shizuoka, 4388501 (JP)
(74) Representative: Grünecker Patent- und Rechtsanwälte PartG mbB

(56) References cited:
- WO-A1-2020/012801
- CN-U- 203 439 194
- KR-B1- 102 603 786

## Description

The present invention relates to a vehicle according to the preamble of independent claim 1 and having at least two vehicle wheels including a front wheel and a rear wheel and including a cargo box. Such a vehicle can be taken from the prior art document KR 10 2603786 B1.

EP 3 778 365 A1 discloses a three-wheeled electric vehicle including a cargo box that allows goods or a person to be placed therein. The chassis of the electric vehicle includes a planar loading bed located between two front wheels, on the one hand, and one rear wheel, on the other. The planar loading bed includes a battery housing. The cargo box is positioned on the planar loading bed.

WO 2020/012801 A1 discloses a three-wheeled electric vehicle including a carrier. This three-wheeled electric vehicle includes two front wheels, one rear wheel, a frame, handlebars, a carrier, and a link mechanism. The frame connects the front and rear wheels. The front wheels are steered using the handlebars. The frame can be extended and contracted between a first position that permits movement of the front wheels and a second position that restricts movement of the front wheels. The three-wheeled electric vehicle includes a battery housing section. A portable battery can be mounted on and detached from the battery housing section.

It is the object of the present invention to provide a vehicle that allows a battery to be mounted so as to be easily accessible and protected from an external impact while being located toward the front of the vehicle at a low position.

According to the present invention said object is solved by a vehicle having the features of independent claim 1. Preferred embodiments are laid down in the dependent claims.

A vehicle according to an embodiment includes:
two or three vehicle wheels including a front wheel and a rear wheel;
a frame;
a handlebar rotatably mounted on the frame to steer the front wheel or the rear wheel;
a cargo box located forward of the handlebar and including a storage space for goods or a person;
a motor configured to drive at least one of the vehicle wheels;
a battery configured to supply the motor with electric power; and
an adapter for the battery to be mounted thereon.

A bottom face of the storage space of the cargo box is located lower than an uppermost point of the front wheel; and
the adapter is located in the storage space of the cargo box, and the battery is placed in the storage space of the cargo box and mounted on the adapter. The battery is constructed to be mountable on and detachable from the adapter by rotating the battery relative to the adapter between an inside and an outside of the storage space.

### BRIEF DESCRIPTION OF THE DRAWINGS

FIG. 1 is a perspective view of a vehicle according to the present embodiment, illustrating an exemplary construction thereof.
FIG. 2 is a left side view of the vehicle of FIG. 1.
FIG. 3 is a top view of the vehicle shown in FIG. 1.
FIG. 4 shows a variation with respect to the positioning of the battery.
FIG. 5 shows a variation with respect to the positioning of the battery.
FIG. 6 shows an exemplary implementation where the battery can be rotated between the inside and the outside of the storage space.
FIG. 7 illustrates an exemplary construction of a cover 60 that covers the battery 6.
FIG. 8 shows the exemplary construction of the battery and cover 60 of FIG. 7 as viewed from the front of the vehicle.
FIG. 9 is a left side view of the vehicle shown in FIG. 2, showing its construction as seen when looking through the cargo box 5.
FIG. 10 is a front view of the vehicle construction shown in FIG. 9.
FIG. 11 is a top view of the vehicle construction shown in FIG. 9.
FIG. 12 is a front view of a variation with respect to vehicle construction.

### DETAILED DESCRIPTION OF THE PREFERRED EMBODIMENTS

### (Arrangement 1)

A vehicle according to a preferred embodiment includes:
two or three vehicle wheels including a front wheel and a rear wheel;
a frame;
a handlebar rotatably mounted on the frame to steer the front wheel or the rear wheel;
a cargo box located forward of the handlebar and including a storage space for goods or a person;
a motor configured to drive at least one of the vehicle wheels;
a battery configured to supply the motor with electric power; and
an adapter for the battery to be mounted thereon.

A bottom face of the storage space of the cargo box is located lower than an uppermost point of the front wheel; and
the adapter is located in the storage space of the cargo box, and the battery is placed in the storage space of the cargo box and mounted on the adapter.

In Arrangement 1 above, the battery is placed in the storage space of the cargo box and mounted on the adapter. The cargo box is located forward of the handlebar, and the bottom face of its storage space is located lower than the uppermost point of the front wheel. In other words, the battery is located toward the front of the vehicle at a low position. Thus, the center of gravity of the vehicle can be located toward the front and at a low position. This will make it easier for the rider to keep the vehicle in an appropriate attitude during traveling. Further, since the battery is located in the cargo box, the rider will be able to access the battery through the same route through which he/she places goods or a person into the cargo box. Furthermore, the battery will be protected by the cargo box from an external impact. Thus, Arrangement 1 above allows the battery to be mounted so as to be easily accessible and protected from an external impact while being located toward the front of the vehicle at a low position.

The battery being placed in the storage space of the cargo box and mounted on the adapter means that the battery is mounted on the adapter such that at least a portion of the battery is located in the storage space when the vehicle is in an upright position.

For example, the battery may be mounted on the adapter such that the entire battery is located within the storage space when the vehicle is in the upright position. This will further increase the arrangement's effect of protecting the battery from an external impact.

When the battery is mounted on the adapter, the battery and the adapter are electrically connected to each other. For example, a connection terminal of the battery and a connection terminal of the adapter are electrically connected to each other.

The cargo box may include: a bottom defining the bottom face of the storage space; a left wall defining a left face of the storage space; a right wall defining a right face of the storage space; a front wall defining a front face of the storage space; and a rear wall defining a rear face of the storage space. In such implementations, the space defined by the bottom, left wall, right wall, front wall and rear wall constitutes the storage space. The bottom of the cargo box may be located lower than the uppermost point of the front wheel, and each of the left wall, right wall, front wall and rear wall may extend upward of the uppermost point of the front wheel. In other words, the storage space may extend from the bottom face and upward of the uppermost point of the front wheel.

The bottom face of the storage space being located lower than the uppermost point of the front wheel means that the bottom face of the storage space is located lower than the uppermost point of the front wheel when the vehicle is in the upright position. The vehicle being in the upright position means that the top-bottom direction of the vehicle coincides with the vertical direction.

### (Arrangement 2)

Starting from Arrangement 1, the battery may be mounted on the adapter such that, when the vehicle is in an upright position, a longitudinal direction of the battery lies along a direction perpendicular to a top-bottom direction of the vehicle. In other words, the battery may be mounted on the adapter such that the longitudinal direction of the battery lies along a plane perpendicular to the top-bottom direction of the vehicle. Thus, the center of gravity of the battery can be located lower than in cases where the battery is mounted such that the longitudinal direction of the battery lies along the top-bottom direction of the vehicle. Implementations where the longitudinal direction of the battery lies along a direction perpendicular to the top-bottom direction of the vehicle include implementations where the longitudinal direction of the battery is exactly coincident with a direction (or plane) perpendicular to the top-bottom direction of the vehicle and, in addition, implementations where the difference between the longitudinal direction of the battery and a direction (or plane) perpendicular to the top-bottom direction of the vehicle is so small (e.g., within 15°) that they can be treated as coincident.

For example, the battery may be mounted on the adapter such that the longitudinal direction of the battery lies along the front-rear direction of the vehicle when the vehicle is in the upright position. In such implementations, the rider can easily access the battery from the left or right of the vehicle. Alternatively, the battery may be mounted on the adapter such that the longitudinal direction of the battery lies along the left-right direction of the vehicle when the vehicle is in an upright position.

Starting from Arrangement 1, the battery may be mounted on the adapter such that, when the vehicle is in an upright position, the longitudinal direction of the battery lies along a top-bottom direction of the vehicle. This enables a reduction in the front-rear or left-right dimension of the area occupied by the battery in the storage space compared with cases where the battery is mounted such that the longitudinal direction of the battery lies along a direction perpendicular to the top-bottom direction of the vehicle. Implementations where the longitudinal direction of the battery lies along the top-bottom direction of the vehicle include implementations where the longitudinal direction of the battery is exactly coincident with the top-bottom direction of the vehicle and, in addition, implementations where the difference between the longitudinal direction of the battery and the top-bottom direction of the vehicle is so small (e.g., within 15°) that they can be treated as coincident.

### (Arrangement 3)

Starting from Arrangement 1 or 2 above, the battery, in the storage space, may be mounted on the adapter such that the entire battery is located rearward of an axle of the front wheel. This enables positioning the battery near the handlebar. Thus, the weight distribution can exhibit a concentration derived from the battery near the center of the yaw rotation of the vehicle. This will reduce yaw moment during turning, thereby improving rotationality.

### (Arrangement 4)

According to a not claimed example, the battery may be constructed to be mountable on and detachable from the adapter by sliding, within the storage space, the battery in a straight line or rotating, within the storage space, the battery relative to the adapter. This enables mounting and detaching the battery within the storage space of the cargo box. For example, the adapter may include a guide configured to slidably support the battery when the battery is sliding in a straight line or rotates. In such implementations, the battery may include a slide member shaped to engage the guide of the adapter.

### (Arrangement 5)

According to the invention, the battery is constructed to be mountable on and detachable from the adapter by rotating the battery relative to the adapter between an inside and an outside of the storage space. This will allow the rider to easily mount and detach the battery. For example, the adapter may include a guide configured to slidably support the battery when the battery is rotating. In such implementations, the battery may include a slide member shaped to engage the guide of the adapter. Further, the cargo box may include a side wall extending upward from the bottom face of the storage space to define the side face, and a portion of the side wall may include an opening that allows the battery to pass therethrough when the battery is rotating relative to the adapter to be mounted or detached.

### (Arrangement 6)

Starting from any one of Arrangements 1 to 5 above, the vehicle may further include a cover covering, from above, at least a portion of the battery placed in the storage space and mounted on the adapter. Thus, the battery can be better protected from an external impact.

The cover may be constructed to cover the entire battery from above.

Within the storage space, a storage room for the battery defined by the cover may be open in at least one direction.

The opening of the storage room for the battery defined by the cover may be in the direction different from the direction from the stored battery toward the rider/passenger of the vehicle. In other words, a cover may be provided that serves as a shield separating the battery and the rider/passenger.

### (Arrangement 7)

Starting from any one of Arrangements 1 to 6 above, the battery may be mounted on the adapter such that, when the vehicle is in an upright position, the entire battery is located below an imaginary line passing through an uppermost point of the handlebar and in contact with an outer circumferential edge of an upper half of the front wheel as viewed in a left-right direction of the vehicle. This will further increase the arrangements' effect of protecting the battery from an impact.

The battery may be mounted on the adapter such that the entire battery is located below the imaginary line passing through the uppermost point of the handlebar and in contact with the outer circumferential edge of the upper half of the front wheel both when the handlebar is not steered (i.e., the steering angle is 0°) and when the handlebar is steered (i.e., the steering angle is not 0°).

### (Arrangement 8)

Starting from any one of Arrangements 1 to 7 above, the battery may be mounted on the adapter such that, when the vehicle is in an upright position, an electrical connection terminal of the battery is located rearward of a middle of the battery as determined along a front-rear direction. This enables positioning the electrical connection terminal of the battery near the handlebar.

For example, the battery may be mounted on the adapter such that, when the vehicle is in the upright position, the longitudinal direction of the battery lies along the front-rear direction of the vehicle and the electrical connection terminal of the battery is located on the rear end of the battery. In such implementations, the battery may be constructed to be mountable on and detachable from the adapter by sliding the battery relative to the adapter in the front-rear direction of the vehicle.

### (Arrangement 9)

Starting from any one of Arrangements 1 to 8 above, the vehicle wheels may include a left front wheel and a right front wheel arranged in a left-right direction.

The vehicle may further include a lean mechanism including an arm configured to support the left front wheel and the right front wheel and supported by the frame so as to be rotatable relative to the frame. The lean mechanism is configured to cause the frame, the left front wheel and the right front wheel to lean to the left or right as the arm rotates.

The cargo box may be positioned to overlap a portion of the lean mechanism as viewed from above the vehicle when the vehicle is in an upright position; and

The battery may be mounted on the adapter so as not to protrude forward of a forwardmost point of the arm of the lean mechanism when the vehicle is in the upright position.

Thus, the battery can be located at a position in the storage space where vibration applied to the battery is relatively small. This will reduce vibration applied to the battery. Further, the arrangements' effect of protecting the battery from an impact will be further increased.

### (Arrangement 10)

Starting from any one of Arrangements 1 to 9 above, the vehicle wheels may include a left front wheel and a right front wheel arranged in a left-right direction.

The vehicle may further include a left steering transmission member configured to transmit rotation of the handlebar to the left front wheel to steer the left front wheel and a right steering transmission member configured to transmit rotation of the handlebar to the right front wheel to steer the right front wheel.

The cargo box may be positioned so as to overlap at least a portion of the left steering transmission member and the right steering transmission member as viewed from above the vehicle when the vehicle is in an upright position; and
the battery may be mounted on the adapter such that, when the vehicle is in an upright position and the handlebar is not steered to the left or right, the battery does not protrude to the left of the left steering transmission member and does not protrude to the right of the right steering transmission member as viewed from above the vehicle.

This will further increase the arrangements' effect of protecting the battery from an impact.

Now, an electric-motor-assisted bicycle according to a preferred embodiment will be described with reference to the drawings. In the drawings, the same or corresponding components are labeled with the same reference numerals, and the description of these components will not be repeated. Further, the sizes of the components in the drawings do not exactly represent the sizes of the actual components, the size ratios between the components, or the like.

As used herein, the directions "front/forward" and "rear(ward)", "left" and "right", and "top/up(ward)" and "bottom/down(ward)" of the vehicle refer to such directions as perceived by a rider sitting on the saddle (i.e., seat 8) and gripping the handlebars 4. When the vehicle is in the upright position, the directions "front/forward" and "rear(ward)", "left" and "right", and "top/up(ward)" and "bottom/down(ward)" of the vehicle are the same as the respective directions of the vehicle body, i.e., frame, of the vehicle. The forward direction of the vehicle is aligned with the front-rear direction of the vehicle. Where a construction of the vehicle is described herein using the terms "front/forward" and "rear(ward)", "left" and "right", and "top/up(ward)" and "bottom/down(ward)", a construction of the vehicle in the upright position is meant unless specific conditions are provided.

In the drawings, arrow F indicates the forward direction with respect to the vehicle. Arrow B indicates the rearward direction with respect to the vehicle. Arrow U indicates the upward direction with respect to the vehicle. Arrow D indicates the downward direction with respect to the vehicle. Arrow R indicates the right direction with respect to the vehicle. Arrow L indicates the left direction with respect to the vehicle.

### <Exemplary Construction of Vehicle>

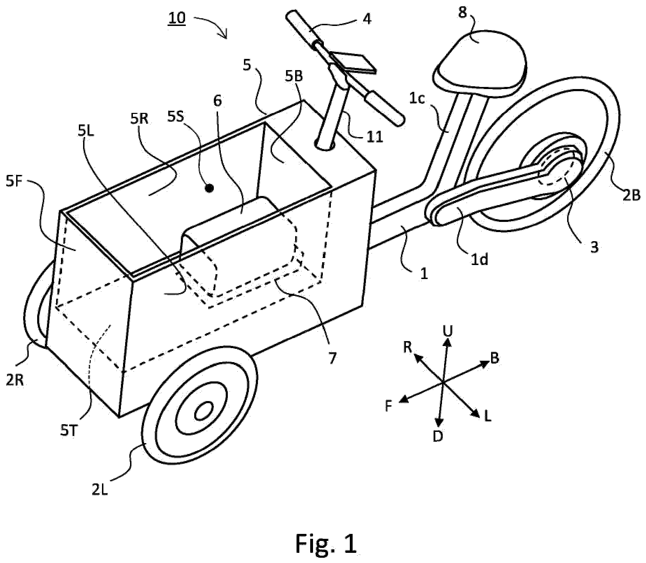

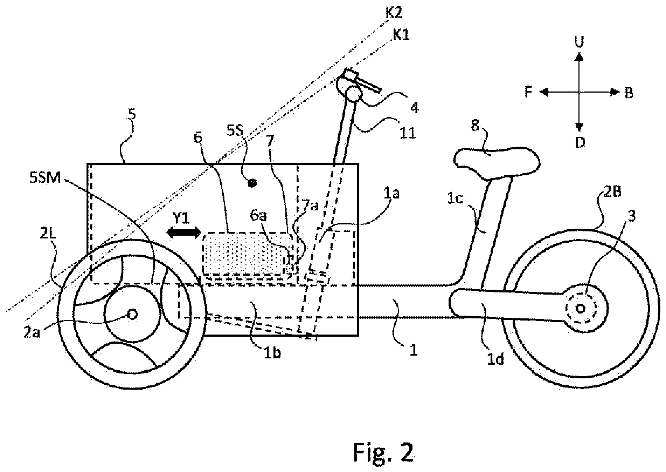

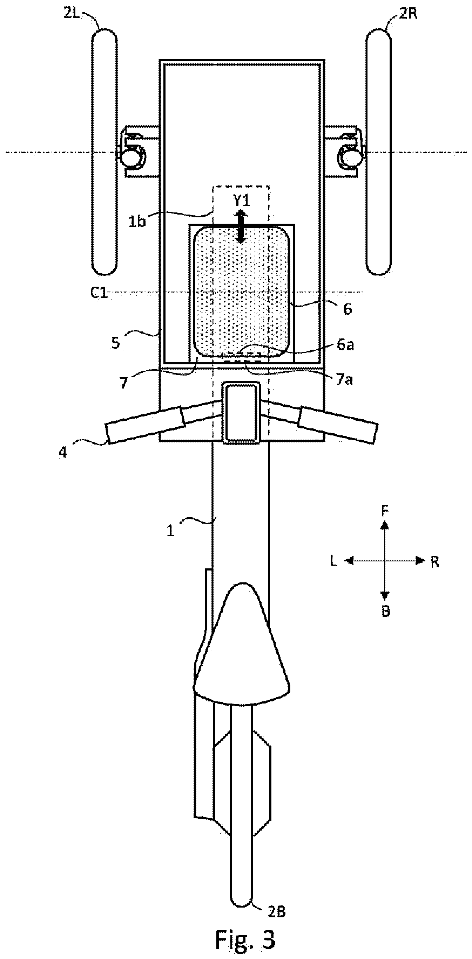

FIG. 1 is a perspective view of a vehicle according to the present embodiment, illustrating an exemplary construction thereof. FIG. 2 is a left side view of the vehicle of FIG. 1. FIG. 3 is a top view of the vehicle shown in FIG. 1. As shown in FIG. 1, the vehicle 10 includes vehicle wheels including front wheels 2R and 2L and a rear wheel 2B, a frame 1, handlebars 4, a seat 8, a cargo box 5, a motor 3, a battery 6, and an adapter 7. The handlebars 4 are rotatably mounted on the frame 1. The motor 3 is a power source for driving the vehicle wheels. The battery 6 supplies the motor 3 with electric power. Rotation of the handlebars 4 is transmitted to the steering wheel(s) (in the implementation of FIG. 1, front wheels 2R and 2L). Rotation of the handlebars 4 causes the steering wheel(s) to be steered. The cargo box 5 is located forward of the handlebars 4. The cargo box 5 includes a storage space 5S that stores goods or a person. The cargo box 5 is a box with an open top.

As shown in FIG. 2, a bottom face 5SM of the storage space of the cargo box 5 is located lower than the uppermost point of the front wheels 2R and 2L. Specifically, the entire bottom face of the storage space is located lower than the uppermost point of the front wheels. The storage space of the cargo box 5 extends from the bottom face 5SM upward of the uppermost point of the front wheels 2R and 2L. As shown in FIG. 1, the cargo box 5 includes the bottom 5T defining the bottom face 5SM, a left wall 5L, a right wall 5R, a front wall 5F, and a rear wall 5B extending upward from the circumferential edge of the bottom face 5SM. The space defined by the bottom 5T, left wall 5L, right wall 5R, front wall 5F, and rear wall 5B constitutes the storage space 5S. The left wall 5L, right wall 5R, front wall 5F and rear wall 5B are collectively referred to as side walls. The side faces of the storage space 5S are defined by the side walls.

An adapter 7 is provided in the storage space 5S. The battery 6 is placed in the storage space 5S of the cargo box 5 and mounted on the adapter 7. Thus, the battery 6 is mounted, forward of the handlebars 4, within the storage space 5S of the cargo box 5 having a bottom face located lower than the uppermost point of the front wheels 2R and 2L.

In this construction, the battery 6 can be located forward of the handlebars at a low position. Thus, the center of gravity of the vehicle 10 is located lower. This provides sufficient maneuverability of the vehicle 10. Further, the rider is able to mount and detach the battery 6 with the same operations with which to place goods or a person in the storage space 5S. Further, the battery 6 is covered with the cargo box 5 from below, from the left and right and from the front and rear. Thus, the battery 6 is protected from an external impact. This provides protection of the battery and accessibility to the battery and, at the same time, provides maneuverability of the vehicle.

The battery 6 may be a battery assembly including a plurality of cells, for example. The battery 6 includes a plurality of cells, a case that contains the plurality of cells, and an exposed electrical connection terminal on the outside of the case. The battery 6 may include a battery management system (BMS). The battery 6 is sometimes also referred to as battery pack, for example.

The adapter 7 includes electrical connection terminals. The adapter 7 is constructed to hold the battery 6 in a mounted state. The mounted state is a state where an electrical connection terminal of the adapter 7 and the electrical connection terminal of the battery 6 are in contact with each other. The adapter 7 may also include a latch member that latches the battery 6 against the adapter 7 in the mounted state. The latch member may be a latching protrusion such as a hook, for example. Further, a lock member may be provided in the storage space 5 to lock and unlock the latch member of the adapter 7 with respect to the latch of the battery 6 in the mounted state.

A cable is connected to an electrical connection terminal of the adapter 7. The cable electrically connects the motor 3 with the battery 6. In the implementation of FIG. 1, the motor 3 drives the rear wheel 2B. By way of example, the motor 3 may be an in-wheel motor located on the hub of the rear wheel 2B. A motor that drives a vehicle wheel is not limited to this construction. For example, a motor may be constructed to drive the front wheel. Alternatively, a motor may be constructed to drive the front and rear wheels. In some implementations, a motor may assist the rider to augment his/her pedal force to propel the vehicle, for example. In such implementations, the vehicle 10 may include a crankshaft, a pedal that receives a pedal force that is to rotate the crankshaft, and a transmission mechanism that transmits rotation of the crankshaft to a vehicle wheel. The transmission mechanism may include a force-synthesizing mechanism that synthesizes rotation of the motor and rotation derived from a pedaling force.

In the implementation shown in FIG. 2, the frame 1 includes a head pipe 1a that rotatably holds a steering axle (i.e., steering column) 11. The handlebars 4 are mounted on the top of the steering axle 11. A steering transmission member is mounted on the bottom of the steering axle 11. The frame includes a rear portion extending rearward from the head pipe 1a and a front portion 1b extending forward from the head pipe 1a. The rear portion includes a seat tube 1c that holds a seat 8. In the implementation of FIG. 2, the swing arm 1d is mounted on the rear portion of the frame 1 so as to be rotatable about a left-right axis. The swing arm 1d supports the rear wheel 2B such that the wheel is rotatable about a vehicle axle. The motor 3 that drives the rear wheel 2B is located on the swing arm 1d.

A supporting structure for the rear wheel 2B is not limited to the example of FIG. 2. For example, the frame may include a seat stay and a chain stay toward the rear. In such implementations, the rear wheel 2B is supported by the rear ends of the seat stay and chain stay.

The side walls and bottom of the cargo box 5 are not limited to any particular material, and may be made of, for example, resin, metal or wood. A portion of the side walls and/or bottom of the cargo box 5 may provide an opening. Further, at least a portion of the side walls and/or and bottom of the cargo box 5 may be formed from mesh. In some implementations, the cargo box 5 may include a lid (i.e., shutter) that is able to open and close the opening in the top of the cargo box 5.

### (Exemplary Positioning of Battery in Storage Space)

In the implementations shown in FIGS. 1 to 3, the battery 6 is mounted on the adapter 7 such that the longitudinal direction of the battery 6 lies along the front-rear direction of the vehicle 10. If the longitudinal direction of the battery 6 in the storage space lies along a direction perpendicular to the top-bottom direction of the vehicle 10, the center of gravity of the battery 6 can be located lower. In a variation, the battery 6 may be mounted on the adapter 7 such that the longitudinal direction of the battery 6 lies along the left-right direction of the vehicle 10. In such implementations, too, the center of gravity of the battery 6 can be located lower.

In the implementation of FIG. 2, the adapter 7 is located at the bottom face 5SM of the storage space 5S. In such an implementation, where the battery 6 is mounted such that the longitudinal direction of the battery 6 lies along a plane perpendicular to the top-bottom direction of the vehicle, the adapter 7 can be located at the bottom face of the storage space 5S. This will further increase embodiments' effect of lowering the center of gravity of the battery. In order to lower the center of gravity, it is preferable that the battery is mounted on the adapter such that the entire battery is located lower than a half of the height of the storage space 5S as measured in the top-bottom direction of the vehicle. The height of the storage space 5S as measured in the top-bottom direction of the vehicle is defined as the distance from the lowest point of the bottom face to the highest point of the side walls as measured in the top-bottom direction of the vehicle.

The longitudinal direction of the battery is defined as that one of the three directions perpendicular to one another for the dimensions of the battery 6 (e.g., width, length and height) which has the largest dimension.

In another variation, the battery 6 may be mounted on the adapter 7 such that the longitudinal direction of the battery 6 lies along the top-bottom direction of the vehicle 10 when the vehicle 10 is in the upright position. This enables a reduction in the front-rear or left-right dimension of the area occupied by the battery in the storage space. Further, in such implementations, the adapter 7 may be positioned at the rear face of the storage space, i.e., the rear wall, such that the weight distribution can exhibit a greater weight concentration derived from the battery 6 near the handlebars. This will provide sufficient rotationality of the vehicle.

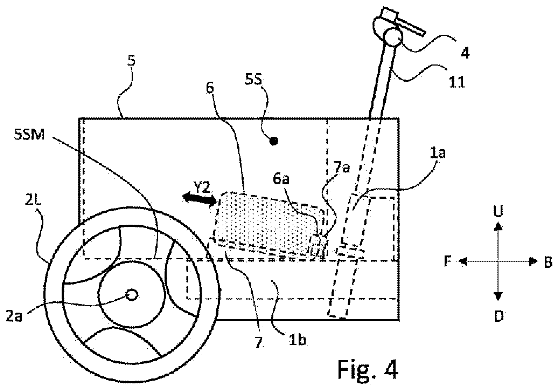

FIG. 4 shows a variation with respect to the positioning of the battery. In the implementation of FIG. 4, the battery 6 is mounted on the adapter 7 such that the longitudinal direction of the battery 6 is slightly inclined relative to a plane perpendicular to the top-bottom direction of the vehicle 10. Mounting the battery 6 on the adapter 7 with the longitudinal direction of the battery 6 inclined will increase mounting stability. For example, in implementations where an electrical connection terminal is provided on one of the surfaces of the ends, as determined along the longitudinal direction, of the battery 6, the battery 6 may be mounted on the adapter 7 with its longitudinal direction inclined such that one of the end surfaces is located lower than the other one. This will increase mounting stability by utilizing the force of gravity acting on the battery. The longitudinal direction of the battery can be treated as lying along a plane perpendicular to the top-bottom direction of the vehicle if the angle between the longitudinal direction of the battery and a plane perpendicular to the top-bottom direction of the vehicle is small (e.g., within 15°), as shown in FIG. 4, when the position of the center of gravity of the battery is considered.

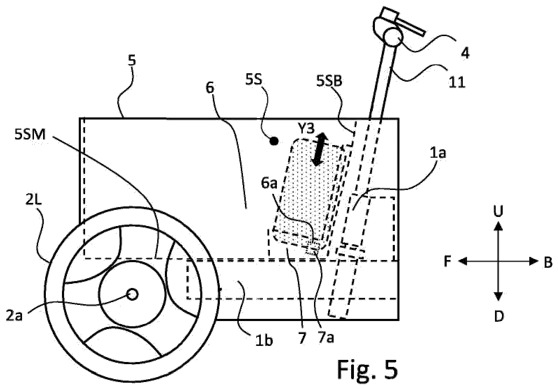

FIG. 5 shows a variation with respect to the positioning of the battery. In the implementation of FIG. 5, the battery 6 is mounted on the adapter 7 such that the longitudinal direction of the battery 6 lies along the top-bottom direction of the vehicle 10 and that the longitudinal direction of the battery 6 is slightly inclined toward the rear relative to the top-bottom direction of the vehicle 10. The adapter 7 is located at the rear face 5SB of the storage space. The rear face of the storage space 5S is inclined relative to the top-bottom direction. The rear face 5SB of the storage space 5S and the longitudinal direction of the battery are inclined toward the rear as it goes upward. This will further increase the mounting stability and accessibility of the battery. Further, since the battery is located near the handlebars 4, it will be easier to provide sufficient rotationality of the vehicle.

By way of example, the inclination of the longitudinal direction of the rear face 5SB and the battery may be the same as the inclination of the steering axle 11 supported by the head pipe 1a. This enables efficiently utilizing the space in front of the steering axle 11 depending on the inclination of the steering axle 11.

In a variation, as viewed in the left-right direction, the battery 6 may be mounted on the adapter 7 in such a position as to overlap the steering axle 11. This enables effectively utilizing the space and allow the battery to be positioned near the handlebars. For example, in arrangements where two batteries 6 are mounted, the two batteries 6 may be mounted on the adapter 7 in such positions as to be arranged in the left-right direction such that the steering axle 11 is located between the two batteries 6.

Returning to FIG. 3, an exemplary position of the battery 6 relative to the frame 1 will be described. As shown in FIG. 3, the battery 6 may be mounted on the adapter 7 such that at least a portion of the battery 6 overlaps the front portion 1b of the frame 1 as viewed from above the vehicle when the vehicle is in the upright position. This enables the frame 1 to support the weight of the battery 6. Further, it will further increase embodiments' effect of protecting the battery 6 from an impact. Furthermore, the battery 6 may be mounted on the adapter 7 such that the battery 6 does not protrude forward of the forwardmost point of the frame 1 as viewed from above the vehicle when the vehicle is in the upright position.

In the implementation of FIG. 3, the battery 6 is mounted on the adapter 7 such that the electrical connection terminal 6a of the battery 6 is located rearward of the middle of the battery 6 as determined along the front-rear direction indicated by line C1. This enables positioning the electrical connection terminal of the battery near the handlebars 4. This enables efficiently positioning a cable of the vehicle 10 connected to the battery. Further, for the same purpose, in implementations where an electrical connection terminal 6a is provided on one of the surfaces of the ends, as determined along the longitudinal direction, of the battery 6, as in the implementation of FIG. 3, the battery 6 may be connected to the adapter 7 such that one end surface is located rearward of the other one.

In the implementation of FIG. 2, the storage space 5S expands forward of the axle 2a of the front wheel 2L. Specifically, at least a portion of the front wall 5F of the cargo box 5 is located forward of the axle 2a of the front wheel 2L. Further, the battery 6, in the storage space 5S, is mounted on the adapter 7 such that the entire battery 6 is located rearward of the axle 2a of the front wheel 2L. This enables providing a storage space 5S that is broad toward the front and positioning the battery 6 near the handlebars 4. This enables ensuring that the storage space 5S is broad in the front-rear direction and the weight distribution exhibits a concentration derived from of the battery near the center of the yaw rotation of the vehicle. It will be understood that an arrangement where the battery 6 is located rearward of the vehicle axle 2a may be applied to the battery arrangements in FIGS. 4 and 5 or other variations.

In the implementation of FIG. 2, when the vehicle is in the upright position, as viewed in the left-right direction of the vehicle, the entire battery 6 mounted on the adapter 7 is located below an imaginary line K1 that passes through the uppermost point of the handlebars 4 and contacts the outer circumferential edge of the upper half of the front wheel 2L. Thus, in addition to the cargo box 5, the front wheel 2L and handlebars 4 are positioned so as to protect the battery 6 from an impact.

An imaginary line K2 shown in FIG. 2 is an exemplary imaginary line that passes through the uppermost point of the handlebars 4 and contacts the outer circumferential edge of the upper half of the front wheel 2L when the handlebars 4 have been steered, i.e., the steering angle is not 0°. The entire battery 6 is located below the imaginary line K2. Thus, the battery mounted on the adapter may be positioned below an imaginary line that passes through the uppermost point of the handlebars and contacts the outer circumferential edge of the upper half of the front wheel when the steering angle is within a possible range achieved by rotation of the handlebars 4. It will be understood that an arrangement where the battery 6 is located below the above-discussed imaginary line(s) may be applied to the battery arrangements of FIGS. 4 and 5 or other variations.

### (Exemplary Manners in Which Battery Is Mounted/Detached)

In the implementation shown in FIGS. 1 to 5, the battery 6 is constructed to be mountable on and detachable from the adapter 7 by sliding it relative to the adapter 7 in a straight line within the storage space 5S. For example, the adapter 7 may include a guide that allows the battery 6 to slide in a straight line, while the battery 6 may include a slide member shaped to conform with the guide of the adapter 7. The guide of the adapter 7 may be a groove or a projection that extends in a straight line, for example. The slide member of the battery 6 may be a projection or groove that extends in a straight line, for example. As the slide member of the battery 6 slides while in contact with the guide of the adapter 7, the battery 6 slides in a straight line toward the mounting position. Further, the adapter 7 may include a latch member that, when the battery 6 is mounted, latches the battery 6 in the mounting position.

In the implementation shown in FIGS. 1 to 4, the battery 6 is constructed to be mountable on and detachable from the adapter 7 by sliding it relative to the adapter 7 in a straight line in the front-rear direction (indicated by arrows Y1 and Y2) within the storage space 5S. In such implementations, since the position of the battery 6 as mounted is located toward the rear in the storage space, the rider will be able to easily mount the battery by inserting the battery 6 from the front, where there is an ample space, toward the rear.

In the implementation shown in FIG. 5, the battery 6 is constructed to be mountable on and detachable from the adapter 7 by sliding it relative to the adapter 7 in a straight line in the top-bottom direction (indicated by arrow Y3) within the storage space 5S. In such implementations, the rider is able to easily mount the battery 6 by inserting the battery 6 through the opening in the top of the cargo box 5.

The battery 6 may be constructed to be mountable on and detachable from the adapter by rotating it relative to the adapter 7 within the storage space 5S. In such implementations, the adapter 7 may include, for example, a guide that supports the battery so as to allow it to slide while being rotated. The battery 6 may include a slide member shaped to engage the guide of the adapter 7. The guide of the adapter 7 may be a recess, for example. The slide member of the battery may be a projection to be fitted into the recess so as to be rotatable. In such implementations, with the projection of the battery 6 fitted into the recess of the guide of the adapter 7, the battery 6 pivotally rotates about the projection. In such implementations, the adapter 7 may include a latch member that, when the battery 6 is mounted, latches the battery 6 in the mounting position.

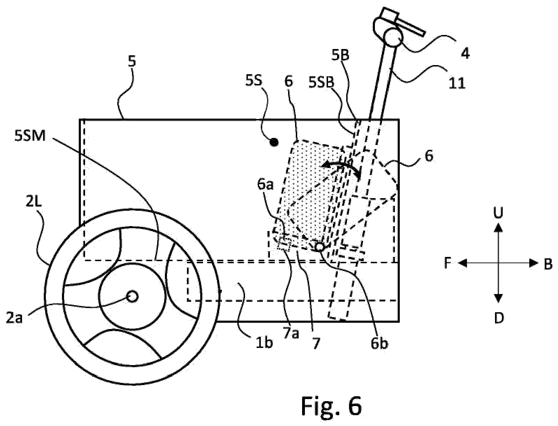

The battery 6 may be constructed to be mountable on and detachable from the adapter by rotating it relative to the adapter 7 between the inside and the outside of the storage space 5S. FIG. 6 shows an example of such a construction. In the implementation of FIG. 6, the battery 6 is constructed to be mountable on and detachable from the adapter by rotating it relative to the adapter 7 through an opening in the rear wall 5B defining the rear face 5SB of the storage space 5S. In such implementations, the battery 6 rotates about the pivot shaft constituted by the projection 6b while the projection 6b, which constitutes the slide member of the battery 6, is fitted in the recess, which constitutes the guide of the adapter 7 (not shown). This rotation causes the battery 6 to be mounted and detached (i.e., removed).

In FIG. 6, during mounting, the battery 6 is rotated relative to the adapter 7 such that the battery 6 moves from outside the storage space 5S to reach the mounting position inside the storage space 5S. During rotation, the electrical connection terminal of the battery 6 and the associated electrical connection terminal of the adapter 7 are separated from each other, and are in contact with each other when the battery is in the mounting position. In a related variation, the adapter 7 may include a rotatable terminal stand that includes an electrical connection terminal. In such implementations, the battery 6 is constructed such that the battery, while connected to the terminal stand of the adapter 7, can be rotated to be mounted on or detached from the adapter 7. When the battery 6 is connected to the terminal stand of the adapter 7, the electrical connection terminal of the battery 6 and the on-stand electrical connection terminal of the adapter 7 are electrically connected to each other. The terminal stand of the adapter 7 is constructed to be rotatable between the mounting position, where the battery is connected to the adapter, and a removal position.

### (Exemplary Construction of Battery Cover)

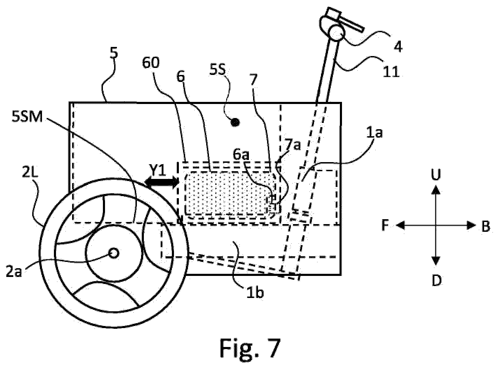

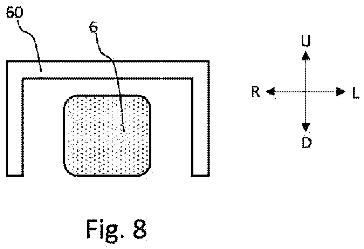

FIG. 7 illustrates an exemplary construction of a cover 60 that covers the battery 6. FIG. 8 shows the exemplary construction of the battery and cover 60 of FIG. 7 as viewed from the front of the vehicle. In the implementation shown in FIGS. 7 and 8, a cover 60 is provided that covers the entire battery 6 from above and from its sides (i.e., left and right). The entire cover 60 is located in the storage space 5S. The cover 60 is not limited to the exemplary shape in FIGS. 7 and 8. For example, the cover 60 may be constructed to cover a portion of the battery 6 from above. The cover 60 may be constructed to cover the battery 6 from above but not from its sides. Furthermore, the battery 6 may be placed in a recess at the bottom face of the storage space and mounted on the adapter 7 therein. In such implementations, the cover 60 may be constituted by a lid that covers, from above, the recess in which the battery 6 is positioned.

In the implementation shown in FIGS. 7 and 8, the front of the battery is not covered with the cover 60. As is the case with this implementation, the storage room for the battery defined by the cover in the storage space 5S may be open in at least one direction. This makes it possible to leave the storage room for the battery unsealed. In such implementations, it is possible to prevent the opening of the storage room for the battery from facing the rider/passenger, for example. Thus, the cover 60 provides a shield separating the rider/passenger and battery.

For example, a seat such as a child seat may be provided in the storage space 5S. In such implementations, the battery 6 may be mounted on the adapter 7 below the seat. In such implementations, the seat constitutes the cover. For example, as viewed from above, the battery 6 may be mounted on the adapter 7 such that the entire battery 6 overlaps the seat. In such implementations, the seat provides a shield separating the battery and a passenger. In addition to the seat, a further cover 60 may be provided.

### (Exemplary Lean Mechanism and Steering Mechanism)

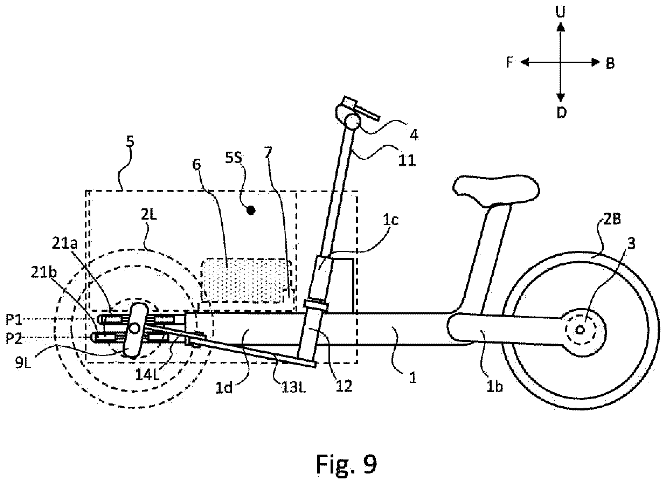

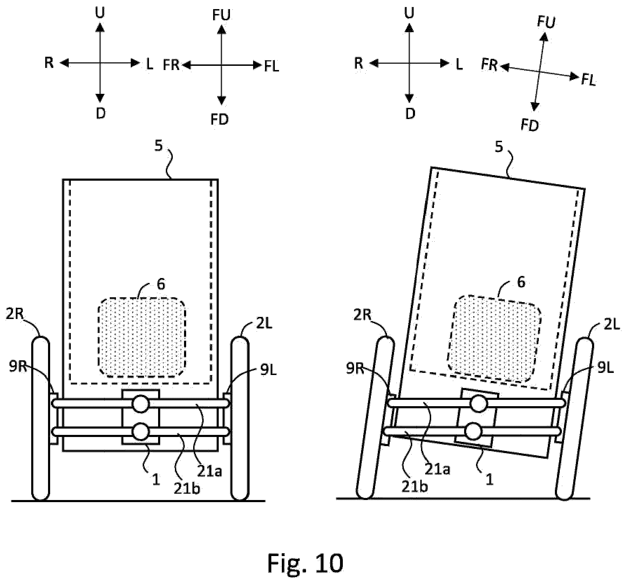

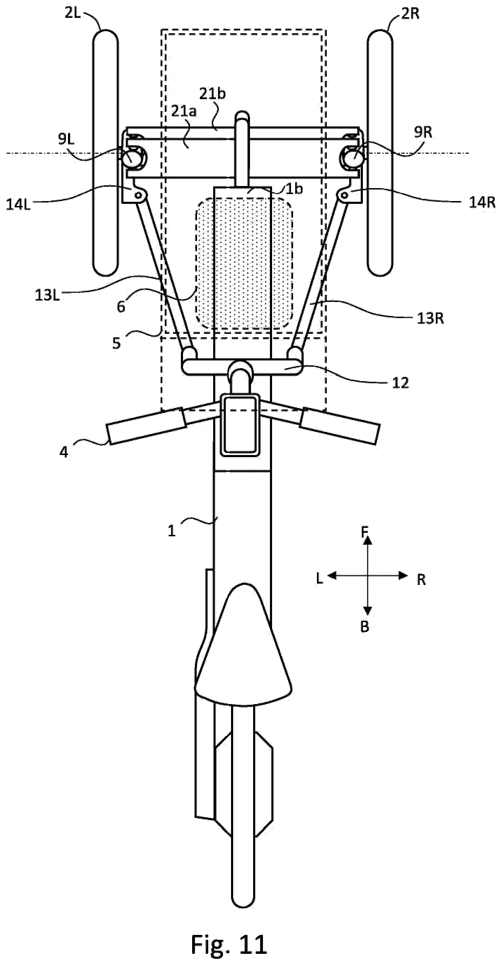

FIG. 9 is a left side view of the vehicle shown in FIG. 2, showing its construction as seen when looking through the cargo box 5. FIG. 10 is a front view of the vehicle construction shown in FIG. 9. FIG. 11 is a top view of the vehicle construction shown in FIG. 9.

In the implementation shown in FIGS. 9 to 11, the vehicle 10 includes a lean mechanism. The lean mechanism includes arms 21a and 21b that support the left front wheel 2L and the right front wheel 2R and are rotatably supported by the frame 1. Rotation of the arms 21a and 21b changes, the positions of the left and right front wheels 2L and 2R relative to the frame 1. This causes the frame 1 and the left and right front wheels 2L and 2R to lean in the left or right direction. The arms 21a and 21b are arranged in the top-bottom direction. The left ends of the arms 21a and 21b are rotatably connected to a left front-wheel support 9L, while the right ends of the arms 21a and 21b are rotatably connected to a right front-wheel support 9R. An intermediate portion of each of the arms 21a and 21b, located between the associated ends, is supported by the frame 1 so as to be rotatable about the relevant one of the front-rear axes P1 and P2. The left front-wheel support 9L rotatably supports the left front wheel 2L. The right front-wheel support 9R rotatably supports the right front wheel 2R.

As shown in FIG. 10, the vehicle 10 including a lean mechanism turns while inclining the frame 1 in the left or right direction of the vehicle relative to the vertical direction. In view of this, in addition to a direction with respect to the vehicle 10, a direction with respect to the frame 1 is to be defined. In FIG. 10, arrow FU indicates the upward direction with respect to the frame. Arrow FD indicates the downward direction with respect to the frame. Arrow FR indicates the right direction with respect to the frame. Arrow FL indicates the left direction with respect to the frame. When the vehicle is in the upright position (see left half of FIG. 10), the top-bottom direction of the vehicle is identical with the top-bottom direction of the frame. When the frame is inclined in the left or right direction relative to the vertical direction (see right half of FIG. 10), the left-right direction of the vehicle is not identical with the left-right direction of the frame. The top-bottom direction of the vehicle is not identical with the top-bottom direction of the frame, either.

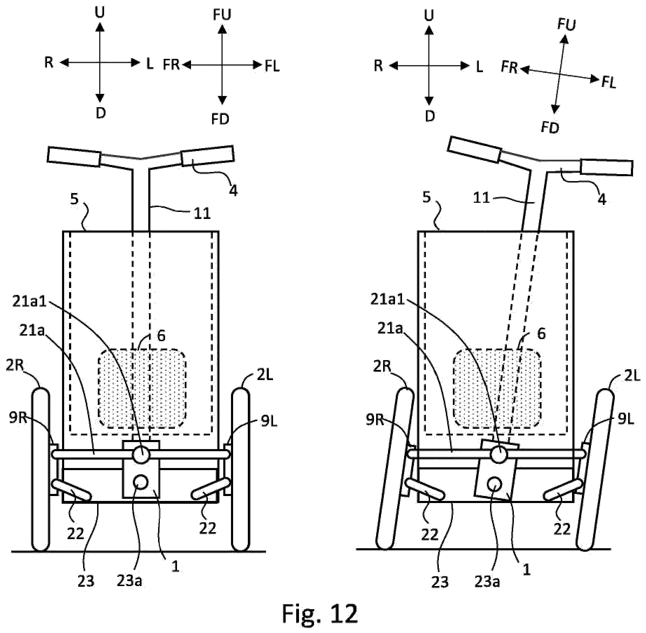

In the implementation of FIG. 10, the cargo box 5 is fixed to the frame 1 such that, when the frame 1 inclines in the left or right direction, the cargo box 5 inclines together with the frame 1. In a variation, the cargo box may be constructed not to incline even when the frame 1 inclines to the left or right. FIG. 12 shows an exemplary lean mechanism where the cargo box does not incline even when the frame inclines to the left or right. In the implementation of FIG. 12, the cargo box 5 is mounted on a bed 23 supported by the frame 1 so as to be rotatable relative to the frame. The lean mechanism includes an arm 21a that supports the left and right front wheels 2L and 2R and is supported by the frame 1 so as to be rotatable relative to the frame, and arms 22 that support the left and right front wheels 2L and 2R and are mounted on the bed 23. In such implementations, the axis of rotation 23a of the bed 23 relative to the frame 1 and the axis of rotation 21a1 of the arm 21a relative to the frame are in the same direction (in the implementation of FIG. 12, the front-rear direction of the vehicle).

As shown in FIG. 11, the cargo box 5 is positioned to overlap a portion of the lean mechanism as viewed from above the vehicle. In this implementation, the cargo box 5 protrudes forward of the forwardmost point of the arms 21a and 21b of the lean mechanism. The battery 6, in the storage space 5S, is mounted on the adapter 7 so as not to protrude forward of the forwardmost point of the arms 21a and 21b of the lean mechanism. This enables positioning the battery 6 near the center of the vehicle, where vibration is smaller than at or near the ends of the vehicle. This enables a reduction in vibration applied to the battery 6. Further, positioning the battery 6 so as not to protrude forward of the lean mechanism improves the stability of the vehicle. Also, embodiments' effect of protecting the battery 6 from an impact is increased. In this respect, for example, the battery 6 may be mounted on the adapter 7 such that the entire battery 6 is located rearward of the arms 21a and 21b of the lean mechanism. Furthermore, the battery 6 may be mounted on the adapter 7 so as not to protrude forward of the forwardmost point of the front portion 1b of the frame 1 nor protrude forward of the forwardmost point of the arms 21a and 21b of the lean mechanism. Moreover, as shown in FIGS. 10 and 12, the battery 6 may be mounted on the adapter 7 so as not to protrude downward of the lowermost point of the arms 21a and 21b of the lean mechanism. This will increase embodiments' effect of protecting the battery from an impact. For the same purpose, the battery 6 may be mounted on the adapter 7 such that the entire battery is located higher than the arms 21a and 21b of the lean mechanism.

As shown in FIGS. 9 and 11, the vehicle 10 further includes a left steering transmission member 13L that transmits rotation of the handlebars 4 to the left front wheel 2L to steer the left front wheel 2L, and a right steering transmission member 13R that transmits rotation of the handlebars 4 to the right front wheel 2R to steer the right front wheel 2R. A branched transmission member 12 is mounted on the lower end of the steering axle 11. The branched transmission member 12 extends from the steering axle 11 to the left and right and then each of the branches, to the left and right of the steering axle 11, extends downward. The branched transmission member 12 rotates together with the steering axle 11. One end of the right steering transmission member 13R is rotatably coupled to the lower right end of the branched transmission member 12, while the other end is rotatably coupled to a bracket 14R of the right front-wheel support 9R. One end of the left steering transmission member 13L is rotatably coupled to the lower left end of the branched transmission member 12, while the other end is rotatably coupled to a bracket 14L of the left front-wheel support 9L.

As shown in FIG. 11, the cargo box 5 is positioned to overlap at least a portion of the left and right steering transmission members 13L and 13R as viewed from above the vehicle. The battery 6 is mounted on the adapter 7 such that, when the vehicle is in the upright position and the handlebars are not steered to the right nor left, the battery does not protrude to the left of the left steering transmission member 13L nor protrude to the right of the right steering transmission member 13R as viewed from above the vehicle. This will achieve improvement of the stability of the vehicle, protection of the battery from an impact, and reduction of vibration applied to the battery. For the same purposes, the battery 6 may be mounted on the adapter 7 such that, when the vehicle is in the upright position and the handlebars are not steered to the right nor left, the battery is located between the left and right steering transmission members 13L and 13R as viewed from above the vehicle. Furthermore, as viewed from above the vehicle, the battery 6 may be mounted on the adapter 7 so as not to protrude forward of the forwardmost point of the front portion 1b of the frame 1 nor protrude to the left of the left steering transmission member 13L nor protrude to the right of the right steering transmission member 13R. Moreover, as shown in FIG. 9, the battery 6 may be mounted on the adapter 7 so as not to protrude downward of the lowermost point of the left and right steering transmission members 13L and 13R. This will increase embodiments' effect of protecting the battery from an impact. For the same purpose, the battery 6 may be mounted on the adapter 7 such that the entire battery is located higher than the left and right steering transmission members 13L and 13R.

The vehicle of the preferred embodiment has the arrangement with two front wheels and one rear wheel. Alternatively, preferred embodiments can also include, for example, vehicles with one front wheel and two rear wheels or vehicles with one front wheel and one rear wheel. Further, the vehicle wheel(s) steered by rotation of the handlebars may be the front wheel(s) or may be the rear wheel(s).

### REFERENCE SIGNS LIST

1: frame
2: vehicle wheels
3: motor
4: handlebars
5: cargo box
6: battery
7: adapter
8: seat

## Claims

1. A vehicle (10) comprising:
at least two vehicle wheels including a front wheel (2R, 2L) and a rear wheel (2B);
a frame (1);
a handlebar (4) rotatably mounted on the frame (1) to steer the front wheel (2R, 2L) or the rear wheel (2B);
a cargo box (5) located forward of the handlebar (4) with regard to a front-rear direction of the vehicle (10) and including a storage space (5S) for goods or a person;
a motor (3) configured to drive at least one of the vehicle wheels;
a battery (6) configured to supply the motor (3) with electric power; and
an adapter (7) for the battery (6) to be mounted thereon,
wherein:
a bottom face (5SM) of the storage space (5S) of the cargo box (5) is located lower than an uppermost point of the front wheel (2R, 2L) with regard to a top-bottom direction of the vehicle (10); and
the adapter (7) is located in the storage space (5S) of the cargo box (5), and the battery (6) is placed in the storage space (5S) of the cargo box (5) and mounted on the adapter (7), **characterized in that** the battery (6) is constructed to be mountable on and detachable from the adapter (7) by rotating the battery (6) relative to the adapter (7) between an inside and an outside of the storage space (5S).

2. The vehicle (10) according to claim 1, **characterized in that** the battery (6) is mounted on the adapter (7) such that, when the vehicle (10) is in an upright position, a longitudinal direction of the battery (6) lies along a direction perpendicular to the top-bottom direction of the vehicle (10).

3. The vehicle (10) according to claim 1 or 2, **characterized in that** the battery (6), in the storage space (5S), is mounted on the adapter (7) such that the entire battery (6) is located rearward of an axle (2a) of the front wheel (2R, 2L) with regard to the front-rear direction of the vehicle (10).

4. The vehicle (10) according to at least one of claims 1 to 3, **characterized by:**
a cover (60) covering, from above with regard to the top-bottom direction of the vehicle (10), at least a portion of the battery (6) placed in the storage space (5S) and mounted on the adapter (7).

5. The vehicle (10) according to at least one of claims 1 to 4, **characterized in that** the battery (6) is mounted on the adapter (7) such that, when the vehicle (10) is in an upright position, the entire battery (6) is located below an imaginary line (K1, K2) passing through an uppermost point of the handlebar (4) with regard to the top-bottom direction of the vehicle (10) and in contact with an outer circumferential edge of an upper half of the front wheel (2R, 2L) with regard to the top-bottom direction of the vehicle (10).

6. The vehicle (10) according to at least one of claims 1 to 5, **characterized in that** the battery (6) is mounted on the adapter (7) such that, when the vehicle (10) is in an upright position, an electrical connection terminal (6a) of the battery (6) is located rearward of a middle of the battery (6) as determined along the front-rear direction of the vehicle (10).

7. The vehicle (10) according to at least one of claims 1 to 6, **characterized in that** the vehicle wheels include a left front wheel (2L) and a right front wheel (2R) arranged in a left-right direction of the vehicle (10).

8. The vehicle (10) according to claim 7, **characterized in that** the vehicle (10) further includes a lean mechanism including an arm (21a, 21b) configured to support the left front wheel (2L) and the right front wheel (2R) and supported by the frame (1) so as to be rotatable relative to the frame (1), the lean mechanism being configured to cause
the frame (1) to lean to the left or right as the arm (21a, 21b) rotates;
the cargo box (5) is positioned to overlap a portion of the lean mechanism as viewed from above the vehicle (10) with regard to the top-bottom direction of the vehicle (10) when the vehicle (10) is in an upright position; and
the battery (6) is mounted on the adapter (7) so as not to protrude forward of a forwardmost point of the arm (21a, 21b) of the lean mechanism with regard to the front-rear direction of the vehicle (10) when the vehicle (10) is in the upright position.

9. The vehicle (10) according to claim 7 or 8, **characterized in that** the vehicle (10)
further includes a left steering transmission member (13L) configured to transmit rotation of the handlebar (4) to the left front wheel (2L) to steer the left front wheel (2L) and a right steering transmission member (13R) configured to transmit rotation of the handlebar (4) to the right front wheel (2R) to steer the right front wheel (2R);
the cargo box (5) is positioned so as to overlap at least a portion of the left steering transmission member (13L) and the right steering transmission member (13R) as viewed from above the vehicle (10) with regard to the top-bottom direction of the vehicle (10) when the vehicle (10) is in an upright position; and
the battery (6) is mounted on the adapter (7) such that, when the vehicle (10) is in an upright position and the handlebar (4) is not steered to the left or right, the battery (6) does not protrude to the left of the left steering transmission member (13L) and does not protrude to the right of the right steering transmission member (13R) with regard to the left-right direction of the vehicle (10) as viewed from above the vehicle (10).

## Patentansprüche

1. Ein Fahrzeug (10), das umfasst:
zumindest zwei Fahrzeugräder, darunter ein Vorderrad (2R, 2L) und ein Hinterrad (2B);
einen Rahmen (1);
einen Lenker (4), der drehbar am Rahmen (1) angebracht ist, um das Vorderrad (2R, 2L) oder das Hinterrad (2B) zu lenken;
einen Transportkasten (5), der in der Vorder-Rück-Richtung des Fahrzeugs (10) vor dem Lenker (4) angeordnet ist und einen Stauraum (5S) für Güter oder eine Person enthält;
einen Motor (3), der so konfiguriert ist, um zumindest eines der Fahrzeugräder anzutreiben;
eine Batterie (6), die so konfiguriert ist, um den Motor (3) mit elektrischer Energie zu versorgen; und
einen Adapter (7) für die Batterie (6), die daran angebracht werden soll, wobei:
eine Bodenfläche (5SM) des Stauraums (5S) des Transportkastens (5) in Bezug auf eine Auf-Ab-Richtung des Fahrzeugs (10) tiefer liegt als ein höchster Punkt des Vorderrads (2R, 2L); und
der Adapter (7) sich im Stauraum (5S) des Transportkastens (5) befindet, und die Batterie (6) in dem Stauraum (5S) des Transportkastens (5) angeordnet und auf dem Adapter (7) befestigt ist, **dadurch gekennzeichnet, dass** die Batterie (6) so ausgebildet ist, dass sie durch Drehen der Batterie (6) relativ zum Adapter (7) zwischen einer Innenseite und einer Außenseite des Stauraums (5S) auf dem Adapter (7) befestigt und von diesem gelöst werden kann.

2. Das Fahrzeug (10) gemäß Anspruch 1, **dadurch gekennzeichnet, dass** die Batterie (6) so auf dem Adapter (7) befestigt ist, dass, wenn sich das Fahrzeug (10) in einer aufrechten Position befindet, eine Längsrichtung der Batterie (6) entlang einer Richtung senkrecht zur Auf-Ab-Richtung des Fahrzeugs (10) verläuft.

3. Das Fahrzeug (10) gemäß Anspruch 1 oder 2, **dadurch gekennzeichnet, dass** die Batterie (6) im Stauraum (5S) so auf dem Adapter (7) angebracht ist, dass sich die gesamte Batterie (6) in Bezug auf die Vorder-Rück-Richtung des Fahrzeugs (10) hinter einer Achse (2a) des Vorderrades (2R, 2L) befindet.

4. Das Fahrzeug (10) gemäß zumindest einem der Ansprüche 1 bis 3, **gekennzeichnet durch:**
eine Abdeckung (60), die in Bezug auf die Auf-Ab-Richtung des Fahrzeugs (10) von oben zumindest einen Abschnitt der im Stauraum (5S) angeordneten und auf dem Adapter (7) montierten Batterie (6) abdeckt.

5. Das Fahrzeug (10) gemäß zumindest einem der Ansprüche 1 bis 4, **dadurch gekennzeichnet, dass** die Batterie (6) so am Adapter (7) befestigt ist, dass sich die gesamte Batterie (6), wenn sich das Fahrzeug (10) in aufrechter Position befindet, unterhalb einer imaginären Linie (K1, K2) liegt, die durch einen obersten Punkt des Lenkers (4) in Bezug auf die Auf-Ab-Richtung des Fahrzeugs (10) verläuft und eine äußere Umfangskante einer oberen Hälfte des Vorderrades (2R, 2L) in Bezug auf die Auf-Ab-Richtung des Fahrzeugs (10) berührt.

6. Das Fahrzeug (10) gemäß zumindest einem der Ansprüche 1 bis 5, **dadurch gekennzeichnet, dass** die Batterie (6) so an dem Adapter (7) angebracht ist, dass sich, wenn sich das Fahrzeug (10) in einer aufrechten Position befindet, ein elektrischer Anschluss (6a) der Batterie (6) hinter einer Mitte der Batterie (6) befindet, die entlang der Vorder-Rück-Richtung des Fahrzeugs bestimmt wird (10).

7. Das Fahrzeug (10) gemäß zumindest einem der Ansprüche 1 bis 6, **dadurch gekennzeichnet, dass** die Fahrzeugräder ein linkes Vorderrad (2L) und ein rechtes Vorderrad (2R) enthalten, die in einer Links-Rechts-Richtung des Fahrzeugs (10) angeordnet sind.

8. Das Fahrzeug (10) gemäß Anspruch 7, **dadurch gekennzeichnet, dass** das Fahrzeug (10) weiterhin einen Neigungsmechanismus enthält, der einen Arm (21a, 21b) enthält, der so konfiguriert ist, um das linke Vorderrad (2L) und das rechte Vorderrad (2R) zu lagern, und der vom Rahmen (1) so gelagert wird, dass er relativ zum Rahmen (1) drehbar ist, wobei der Neigungsmechanismus so konfiguriert ist, um zu bewirken, dass sich der Rahmen (1) nach links oder rechts neigt, wenn sich der Arm (21a, 21b) dreht;
der Transportkasten (5) so positioniert ist, dass er einen Abschnitt des Neigungsmechanismus überlappt, wenn man von oben auf das Fahrzeug (10) in Bezug auf die Auf-Ab-Richtung des Fahrzeugs (10) blickt, während sich das Fahrzeug (10) in einer aufrechten Position befindet; und
die Batterie (6) ist an dem Adapter (7) so angebracht, dass sie in Bezug auf die Vorder-Rück-Richtung des Fahrzeugs (10) nicht über den vordersten Punkt des Arms (21a, 21b) des Neigungsmechanismus hinausragt, wenn sich das Fahrzeug (10) in der aufrechten Position befindet.

9. Das Fahrzeug (10) gemäß Anspruch 7 oder 8, **dadurch gekennzeichnet, dass** das Fahrzeug (10) weiterhin ein linkes Lenkübertragungselement (13L) enthält, das so konfiguriert ist, um die Drehung des Lenkers (4) auf das linke Vorderrad (2L) zu übertragen, um das linke Vorderrad zu lenken (2L) zu lenken, sowie ein rechtes Lenkübertragungselement (13R), das so ausgebildet ist, um die Drehung des Lenkers (4) auf das rechte Vorderrad (2R) zu übertragen, um das rechte Vorderrad (2R) zu lenken;
der Transportkasten (5) so positioniert ist, dass er zumindest einen Abschnitt des linken Lenkübertragungselements (13L) und des rechten Lenkübertragungselements (13R) überlappt, wenn man von oben auf das Fahrzeug (10) in Bezug auf die Auf-Ab-Richtung des Fahrzeugs (10) blickt, während sich das Fahrzeug (10) in einer aufrechten Position befindet; und
die Batterie (6) ist so an dem Adapter (7) angebracht, sodass, wenn sich das Fahrzeug (10) in einer aufrechten Position befindet und der Lenker (4) weder nach links noch nach rechts gelenkt ist, die Batterie (6) in Bezug auf die Links-Rechts-Richtung des Fahrzeugs (10), von oben auf das Fahrzeug (10) betrachtet, nicht links vom linken Lenkelement (13L) und nicht rechts vom rechten Lenkelement (13R) hervorsteht.

## Revendications

1. Véhicule (10) comprenant :
au moins deux roues de véhicule incluant une roue avant (2R, 2L) et une roue arrière (2B) ;
un cadre (1) ;
un guidon (4) installé en rotation sur le cadre (1) pour diriger la roue avant (2R, 2L) ou la roue arrière (2B) ;
une caisse de charge (5) installée en avant du guidon (4) par rapport à une direction avant-arrière du véhicule (10) et incluant un espace de stockage (5S) pour des marchandises ou une personne ;
un moteur (3) configuré pour entraîner au moins une des roues de véhicule ;
une batterie (6) configurée pour alimenter le moteur (3) avec une puissance électrique ; et
un adaptateur (7) pour la batterie (6) à installer sur celui-ci,
dans lequel :
un côté de fond (5SM) de l'espace de stockage (5S) de la caisse de charge (5) est positionné plus bas qu'un point le plus haut de la roue avant (2R, 2L) par rapport à une direction haut-bas du véhicule (10) ; et
l'adaptateur (7) est placé dans l'espace de stockage (5S) de la caisse de charge (5), et la batterie (6) est placée dans l'espace de stockage (5S) de la caisse de charge (5) et montée sur l'adaptateur (7), **caractérisé en ce que** la batterie (6) est construite pour être installée sur ou retirée de l'adaptateur (7) en tournant la batterie (6) par rapport à l'adaptateur (7) entre un intérieur et un extérieur de l'espace de stockage (5S).

2. Le véhicule (10) selon la revendication 1, **caractérisé en ce que** la batterie (6) est montée sur l'adaptateur (7) de sorte que, lorsque le véhicule (10) se trouve dans une position verticale, une direction longitudinale de la batterie (6) s'aligne sur une direction perpendiculaire à la direction haut-bas du véhicule (10).

3. Le véhicule (10) selon la revendication 1 ou 2, **caractérisé en ce que** la batterie (6), dans l'espace de stockage (5S), est montée sur l'adaptateur (7) de sorte que l'intégralité de la batterie (6) est placée en arrière d'un essieu (2a) de la roue avant (2R, 2L) par rapport à la direction avant-arrière du véhicule (10).

4. Le véhicule (10) selon au moins une des revendications 1 à 3, **caractérisé par** :
un capot (60) couvrant, depuis le dessus par rapport à la direction haut-bas du véhicule (10), au moins une partie de la batterie (6) placée dans l'espace de stockage (5S) et montée sur l'adaptateur (7).

5. Le véhicule (10) selon au moins une des revendications 1 à 4, **caractérisé en ce que** la batterie (6) est montée sur l'adaptateur (7) de sorte que, lorsque le véhicule (10) se trouve dans une position verticale, l'intégralité de la batterie (6) est placée au-dessous d'une ligne imaginaire (K1, K2) passant par un point le plus élevé du guidon (4) par rapport à la direction haut-bas du véhicule (10) et en contact avec une arête circonférentielle extérieure d'une moitié supérieure de la roue avant (2R, 2L) par rapport à la direction haut-bas du véhicule (10).

6. Le véhicule (10) selon au moins une des revendications 1 à 5, **caractérisé en ce que** la batterie (6) est montée sur l'adaptateur (7) de sorte que, lorsque le véhicule (10) se trouve dans une position verticale, une borne de connexion électrique (6a) de la batterie (6) est placée en arrière d'un milieu de la batterie (6) tel que déterminé sur la direction avant-arrière du véhicule (10).

7. Le véhicule (10) selon au moins une des revendications 1 à 6, **caractérisé en ce que** les roues de véhicule incluent une roue avant gauche (2L) et une roue avant droite (2R) disposées dans une direction gauche-droite du véhicule (10).

8. Le véhicule (10) selon la revendication 7, **caractérisé en ce que** le véhicule (10) inclut en outre un mécanisme d'inclinaison incluant un bras (21a, 21b) configuré pour soutenir la roue avant gauche (2L) et la roue avant droite (2R) et soutenu par le cadre (1) de sorte à être mobile en rotation par rapport au cadre (1), le mécanisme d'inclinaison étant configuré pour faire en sorte que le cadre (1) s'incline vers la gauche ou la droite tandis que le bras (21a, 21b) tourne ;
la caisse de charge (5) est positionnée pour chevaucher une partie du mécanisme d'inclinaison tel que visualisé depuis le dessus du véhicule (10) par rapport à la direction haut-bas du véhicule (10) lorsque le véhicule (10) est dans une position verticale ; et
la batterie (6) est montée sur l'adaptateur (7) de sorte à ne pas déborder en avant d'un point le plus en avant du bras (21a, 21b) du mécanisme d'inclinaison par rapport à la direction avant-arrière du véhicule (10) lorsque le véhicule (10) est dans la position verticale.

9. Le véhicule (10) selon la revendication 7 ou 8, **caractérisé en ce que** le véhicule (10) inclut en outre un élément de transmission de direction gauche (13L) configuré pour transmettre une rotation du guidon (4) à la roue avant gauche (2L) pour orienter la roue avant gauche (2L), et un élément de transmission de direction droit (13R) configuré pour transmettre une rotation du guidon (4) à la roue avant droite (2R) pour orienter la roue avant droite (2R) ;
la caisse de charge (5) est positionnée de sorte à chevaucher au moins une partie de l'élément de transmission de direction gauche (13L) et de l'élément de transmission de direction droit (13R) tel que visualisé depuis le dessus du véhicule (10) par rapport à la direction haut-bas du véhicule (10) lorsque le véhicule (10) est dans une position verticale ; et
la batterie (6) est montée sur l'adaptateur (7) de sorte que, lorsque le véhicule (10) est dans une position verticale et le guidon (4) n'est pas orienté vers la gauche ou la droite, la batterie (6) ne déborde pas vers la gauche de l'élément de transmission de direction gauche (13L), et ne déborde pas vers la droite de l'élément de transmission de direction droit (13R) par rapport à la direction gauche-droite du véhicule (10) tel que visualisé depuis le dessus du véhicule (10).
